# EUROPÄISCHE PATENTSCHRIFT

(11) **EP 3 504 038 B1**
(45) Veröffentlichungstag und Bekanntmachung des Hinweises auf die Patenterteilung: **11.10.2023**
(21) Anmeldenummer: 17754183.6
(22) Anmeldetag: 23.08.2017
(51) Int. Cl.: B29C 44/02, B29C 44/34, C08J 9/04, C08J 9/00

(54) **MIKROWELLENAUFSCHÄUMEN**
MICROWAVE FOAMING
MOUSSAGE MICRO-ONDES

(30) Priorität: 25.08.2016 EP 16185610
(43) Veröffentlichungstag der Anmeldung: 03.07.2019
(73) Patentinhaber: BASF SE, 67056 Ludwigshafen am Rhein (DE)
(72) Erfinder: PRISSOK, Frank, 49448 Lemfoerde (DE); HARMS, Michael, 49448 Lemfoerde (DE)
(74) Vertreter: BASF IP Association
(86) Internationale Anmeldenummer: PCT/EP2017/071248
(87) Internationale Veröffentlichungsnummer: WO 2018/037051

(56) Entgegenhaltungen:
- EP-A1- 3 181 620
- CN-A- 105 504 330
- DE-A1- 4 006 648
- US-A- 4 256 850
- US-A- 4 306 034
- US-A- 4 352 854
- JIANG LIANG ET AL: "Reactive processing of thermoplastic elastomers based on polyamide-6: preparation and characterization", IRANIAN POLYMER JOURNAL, IRAN POLYMER AND PETROCHEMICAL INSTITUTE, IR, vol. 25, no. 9, 8 August 2016 (2016-08-08) , pages 765-773, XP036051294, ISSN: 1026-1265, DOI: 10.1007/S13726-016-0465-1 [retrieved on 2016-08-08]
- PROCIAK A ET AL: "Thermoplastic polyurethane foamed under microwave irradiation", POLIMERY/POLYMERS 2012 INDUSTRIAL CHEMISTRY RESEARCH INSTITUTE POL,, vol. 57, no. 11-12, 1 January 2012 (2012-01-01), pages 786-790, XP002765671, DOI: 10.14314/POLIMERY.2012.786

## Beschreibung

Die vorliegende Erfindung betrifft ein Verfahren zum Aufschäumen von thermoplastischem Elastomer, wobei das Elastomer durch elektromagnetische Strahlung erhitzt wird, sich dadurch das Treibmittel aufbläht und das Elastomer zu einem Schaum formt.

### Stand der Technik

Thermoplastische Elastomere und deren Schäume sind seit langem bekannt. Beispielsweise beschreibt die DE 4 006 648 ein Verfahren zur Herstellung von zellhaltigen Polyurethan-Formkörpern durch Sinterung. Die DE 4 107 454 beschreibt ebenfalls ein Verfahren zum Aufschäumen von thermoplastischem Polyurethan.

EP 2 430 097 Hybridschaum beschreibt einen Extrusionsschaum aus thermoplastischem Polyurethan. Aleksander Prociak, et al. POLIMERY, Dez. 2012, S. 786-790 beschreibt ein Verfahren zum Aufschäumen von thermoplastischem Polyurethan in dem Rus enthalten ist mit Hilfe von Mikrowellenstrahlen. EP 1 979 401 beschreibt Schaumstoffe auf Basis thermoplastischer Polyurethane und beschreibt auch TPU Partikelschaum.

Bei diesen Verfahren wird das Elastomer in einem ersten Schritt mit einem Treibmittel versehen, das dann durch Wärmeeinwirkung expandiert und zu gasgefüllten Einschlüssen in dem Elastomer führt. Ist ausreichend Treibmittel vorhanden entsteht auf diese Weise ein Schaum. Durch besondere Prozessführung, z.B. Gegendruck bei der Herstellung von Elastomergranulat, kann das Treibmittel in dem Elastomer im nicht expandierten Zustand gehalten werden und erst bei einer späteren Formgebung aufgebläht werden. Da das Formteil durcherhitzt werden muss, dauert der Prozess sehr lange. Gleichzeitig ist die Ausformung und Größe des Schaums durch die Eindringtiefe der Temperatur in das Elastomer limitiert.

Die Aufgabe der vorliegenden Erfindung bestand somit darin die Nachteile der beschriebenen Verfahren zu überwinden und ein besseres Verfahren bereitzustellen.

### Beschreibung

Überraschenderweise gelingt dies indem thermoplastisches Elastomer enthaltend ein bei 23 °C festes Treibmittel, wobei das Elastomer und das Treibmittel als Pulver vorliegen und das Elastomer mit dem Treibmittel vermischt wird, mittels elektromagnetischer Strahlung soweit erhitzt wird. dass das Elastomer zumindest teilweise schmilzt und so zu einem Schaum aufschäumt, wobei die Frequenz der elektromagnetischen Strahlung zwischen 0,01 GHz und 300 GHz liegt, bevorzugt zwischen 0,01 GHz und 100 GHz, besonders bevorzugt 0,1 GHz und 50 GHz und das Elastomer ausgewählt ist aus der Gruppe, thermoplastisches Polyurethan (TPU), thermoplastisches Polyesterelastomer, und thermoplastisches Co-Polyamid.

Dabei kann es sich grundsätzlich um ein physikalisches Treibmittel handeln oder um ein chemisches Treibmittel. Chemische Treibmittel werden vom Fachmann so ausgewählt, dass ihre Zersetzungstemperatur bevorzugt größer als die Schmelztemperatur des thermoplastischen Polyurethans ist. Die bei 23 °C erfindungsgemäß festen chemischen Treibmittel werden vor dem Aufschäumen homogen mit dem Elastomer vermischt. Dabei nimmt die Größe des Elastomers einen entscheidenden Einfluss auf die Poren des entstehenden Schaumes. Bevorzugt ist die homogene Verteilung des Treibmittels in dem Elastomer. Für besondere Ausführungsformen kann das Treibmittel aber auch inhomogen verteilt werden, so dass auf diese Weise besondere Schäume, wie z.B. Integralschäume herstellen lassen. Durch selektives Einbringen von Treibmittel können isoliert schaumstoffartige Gebilde, bevorzugt Figuren oder Schriftzüge, in einem im Übrigen nicht geschäumten Elastomer hergestellt werden.

In weiteren bevorzugten Ausführungsformen werden die elektromagnetischen Wellen mittels Laufzeitröhren, wie Klystrons, Wanderfeldröhren oder Magnetrons, Gunndioden für Festfrequenzen verwendet. In anderen bevorzugten Ausführungsformen werden Backwardwave Oszillatoren für große Frequenzbereiche verwendet, oder Masern für die gerichtete Bestrahlung und Erwärmung von einzelnen Bereichen und/oder Schichten der Formteile.

Das Elastomer muss nicht komplett unter dem Einfluss der elektromagnetischen Strahlung schmelzen. Wie oben dargestellt werden in einer bevorzugten Ausführungsform gezielt nur Teile des Elastomers erhitzt, wodurch dreidimensionale Gebilde entstehen. So lassen sich z. B, geschäumte Schriftzüge oder Figuren herstellen.

Auf das regional begrenzte Schmelzen des Elastomers wird auch durch den Ausdruck "das Elastomer schmilzt zumindest teilweise" Bezug genommen. Dabei wird auf das gesamte vorgelegte Elastomer Bezug genommen, das nur teilweise zum Schmelzen gebracht wird.

Durch die Tiefenwirkung der elektromagnetischen Strahlung in diesem Frequenzbereich, wie sie beim Formen in Formkörpern nicht möglich ist, ist eine schnelle, gezielte und genau dosierbare Erwärmung des Elastomers möglich und damit ein schnelles Aufschäumen möglich, ohne dass die Wärme langsam von außen nach innen dringen muss. Dadurch kann die Erwärmung auch in tieferen Schichten erfolgen.

Ein weiterer Vorteil des Verfahrens gegenüber dem üblichen Verfahren ist, dass die Formen nicht mehr wärmeleitfähig sein müssen und auch keine hohe Wärmkapazität zur Speicherung der Schmelzenergie benötigen. Es kann somit auf Metallformen verzichtet werden. Stattdessen werden vorzugsweise hochtemperaturbeständige Polymerwerkstoff, Keramiken oder Glas, die keine Mikrowellenabsorption besitzen, verwendet. Diese Werkstoffe sind beispielsweise als Materialien für Mikrowellengeschirr bekannt.

Durch die Verwendung von Kunststoffformen kann das beschriebene Verfahren eine sehr günstige Alternative zur Herstellung kleiner Stückzahlen darstellen, da die Herstellungskosten der Formen deutlich geringer sind.

Es werden Kunststoffe eingesetzt, die einen möglichst hohen Schmelzpunkt haben und keine oder fast keine elektromagnetischen Wellen der bevorzugten Wellenlängen absorbieren. Bevorzugt sind Polyethersulfon, Silicone, Polyetherketon, Polytetraflourethylen, Polymethylpenten, besonders bevorzugt ist Polyethersulfon, Polyetherketon und Siliconkautschuk.

In einer bevorzugten Ausführungsform wird das Elastomer in einer Form aus diesen Kunststoffen aufgeschäumt.

Durch Einfärbung des Elastomers werden zudem vielfältigste Designs möglich.

Ein weiterer Vorteil dieses Verfahrens ist der, dass durch unterschiedlich intensive Bestrahlung einzelner Bereich frei strukturierte und regional individuell aufgeschäumte Schäume möglich werden.

Erfindungsgemäß ist das Elastomer durch seine chemische Struktur selbst in der Lage elektromagnetische Strahlung zu absorbieren.

Dem Aufschäumen mit elektromagnetischer Strahlung sind aber gleichermaßen alle Thermoplasten, bevorzugt die thermoplastischen Elastomere, zugänglich, wenn Additive zugesetzt werden, die die elektromagnetische Strahlung absorbieren und so zur Erweichung des Thermoplasten führen.

Erfindungsgemäße thermoplastische Elastomere, die auch ohne oder nur mit geringem Zusatz von diesen Additiven auskommen, sind ausgewählt aus der Gruppe thermoplastisches Polyurethan (TPU), thermoplastisches Polyesterelastomer, bevorzugt Polyetherester und/oder

Polyesterester, und thermoplastisches Copolyamid. In einer anderen bevorzugten Ausführungsform ist das thermoplastische Polyesterelastomer, ausgewählt aus der Gruppe Polyetherester und Polyesterester, oder das thermoplastische Copolyamid ausgewählt aus der Gruppe Polyetheramid und Polyesteramid, wobei die Auswahl aus den beiden bevorzugten Gruppen auch gleichzeitig erfolgen kann.

Wiederrum andere Polyamide sind die Thermoplasten Polyamid 12, Polyamid 6/12 und Polyamid 12/12.

Besonders bevorzugt werden Elastomere auf Basis von thermoplastischem Polyurethan (TPU) verwendet.

In einer bevorzugten Ausführungsform wird das thermoplastische Elastomer, bevorzugt das thermoplastisches Polyurethan ohne Beschichtung oder den Zusatz von elektromagnetischer Strahlung absorbierendem Additiv verwendet.

Die verwendeten thermoplastischen Elastomere, insbesondere das thermoplastische Polyurethan, weisen bevorzugt eine Shore-Härte im Bereich von 30 A bis 83 D auf, bevorzugt 35 A bis 78 D, besonders 40 A bis 74 D.

Für einige Anwendungsformen ist eine sehr schnelle Erwärmung des Elastomers gewünscht oder das Elastomer absorbiert die elektromagnetische Strahlung selbst zu wenig. In diesen Fällen wird ein Additiv zugesetzt, das die Absorption der elektromagnetischen Strahlung erhöht. Das bedeutet, dass das Additiv selbst die elektromagnetische Strahlung absorbiert, wobei die Absorption so stark ist, dass sie merklich zur Erhitzung des Elastomers beiträgt. Unter einem merklichen Beitrag zur Erhitzung des Elastomers wird verstanden, dass die Zeit die eine Elastomerprobe bis zur Schmelze erhitzt wird sich durch die Zugabe des Additivs deutlich verkürzt wird. Dabei wird die Probe der Wellenlänge der elektromagnetischen Strahlung ausgesetzt, die zur Herstellung der erfindungsgemäßen Schäume eingesetzt wird. Um die Zeitdifferenz bis zur Schmelze zu messen, wird das Elastomer ohne das Treibmittel zu einer Schwarte von ca. 5 mm Dicke ausgegossen. Aus dieser Schwarte werden rechteckige Stücke mit 1 cm Seitenlänge ausgeschnitten und einem Strahler mit der zum Einsatz kommenden elektromagnetischen Strahlung ausgesetzt. Dabei wird die Probe zunächst bei 23 °C für eine Stunde konditioniert und dann unmittelbar der elektromagnetischen Strahlung ausgesetzt und die Zeit bis zur sichtbaren Schmelze gestoppt. Als sichtbare Schmelze wird dabei der Zeitpunkt verstanden, wenn sich ein erstes Fließen der Oberfläche einstellt. Die elektromagnetische Strahlung wird dabei so dosiert, dass das Schmelzen nach ca. 1 min eintritt (t1).

Anschließend wir in derselben Weise mit einer in gleicher Weise behandelten Probe verfahren, die aus dem Elastomer enthaltend das Additiv hergestellt wurde (t2). Das Additiv trägt merklich zum Erhitzen des Elastomers bei, wenn der Quotient aus Zeitdifferenz (t1 - t2) und dem Zeitraum ohne Additivzusatz (t1) größer als 0,1, weiter bevorzugt größer als 0,3 und insbesondere größer als 0,5 ist.

Copolyamid Für das erfindungsgemäße Verfahren geeignete thermoplastische Copolyamide können nach allen gängigen, literaturbekannten Verfahren durch Reaktion von Aminen und Carbonsäuren beziehungsweise deren Estern erhalten werden. Amine und/oder Carbonsäuren enthalten hierbei zudem Ethereinheiten des Typs R-O-R, wobei R ein aliphatischer oder aromatischer organischer Rest ist. Im Allgemeinen werden Monomere ausgewählt aus den folgenden Verbindungsklassen eingesetzt:

HOOC-R'-NH₂,

wobei R' aromatisch oder aliphatisch sein kann und vorzugsweise Ethereinheiten des Typs R-O-R enthält. R steht dabei für einen aliphatischen oder aromatischen organischen Rest,
aromatische Dicarbonsäuren, beispielsweise Phthalsäure, Isophthalsäure und Terephthalsäure beziehungsweise deren Ester sowie aromatische Dicarbonsäuren enthaltend Ethereinheiten des Typs R-O-R, wobei R ein aliphatischer oder
aromatischer organischer Rest ist,
aliphatische Dicarbonsäuren, beispielsweise Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren, sowie aliphatische Dicarbonsäuren enthaltend Ethereinheiten des Typs R-O-R, wobei R ein aliphatischer und/oder aromatischer organischer Rest ist, Diamine der allgemeinen Formel H₂N-R"-NH₂, wobei R" aromatisch und aliphatisch sein kann und vorzugsweise Ethereinheiten des Typs R-O-R enthält und R ein aliphatischer und/oder aromatischer organischer Rest ist,
Lactame, beispielsweise E-Caprolactam, Pyrrolidon oder Laurolactam sowie Aminosäuren.

Neben den genannten Carbonsäuren beziehungsweise deren Estern sowie den genannten Aminen, Lactamen und Aminosäuren können alle weiteren gängigen Vertreter dieser Verbindungsklassen zur Bereitstellung des im erfindungsgemäßen Verfahren eingesetzten Polyetheramins verwendet werden. Zudem sind Mischprodukte aus Polytetrahydrofuran und Amidbau bekannt, die ebenfalls bevorzugt eingesetzt werden können.

### Polyetherester und Polyesterester

Die thermoplastischen Polyetherester und Polyesterester können nach allen gängigen, literatur bekannten Verfahren durch Umesterung beziehungsweise Veresterung von aromatischen und aliphatischen Dicarbonsäuren mit 4 bis 20 C-Atomen beziehungsweise deren Estern mit geeigneten aliphatischen und aromatischen Diolen und Polyolen hergestellt werden. Entsprechende Herstellverfahren sind zum Beispiel beschrieben in "Polymer Chemistry", Interscience Publ., New York, 1961, S.111-127; Kunststoffhandbuch, Band VIII, C. Hanser Verlag, München 1973 und Journal of Polymer Science, Part A1, 4, Seiten 1851-1859 (1966).

Geeignete aromatische Dicarbonsäuren sind zum Beispiel Phthalsäure, Isophthalsäure und Terephthalsäure beziehungsweise deren Ester. Geeignete aliphatische Dicarbonsäuren sind zum Beispiel Cyclohexan-1,4-Dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren.

Als Diolkomponente eignen sich beispielsweise Diole der allgemeinen Formel HO-(CH₂)ₙ-OH, wobei n eine ganze Zahl von 2 bis 20 ist. Geeignete Diole sind zum Beispiel Ethylenglykol, Propandiol-(1,3), Butandiol-(1,4) oder Hexandiol-(1,6).

Polyetherole, durch deren Umesterung der thermoplastische Polyetherester hergestellt werden kann, sind vorzugsweise solche der allgemeinen Formel HO-(CH₂)ₙ-O-(CH₂)ₘ-OH, wobei n und m gleich oder verschieden sein können und n und m unabhängig voneinander jeweils eine ganze Zahl zwischen 2 und 20 bedeuten.

Ungesättigte Diole und Polyetherole, die zur Herstellung des Polyetheresters eingesetzt werden können, sind zum Beispiel Butendiol-(1,4) sowie aromatische Einheiten enthaltende Diole und Polyetherole.

Neben den genannten Carbonsäuren beziehungsweise deren Estern sowie den genannten Alkoholen können alle weiteren gängigen Vertreter dieser Verbindungsklassen zur Bereitstellung der im erfindungsgemäßen Verfahren eingesetzten Polyetherester und Polyesterester verwendet werden. Die Hartphasen der Blockcopolymere werden üblicherweise aus aromatischen Dicarbonsäuren und kurzkettigen Diolen gebildet, die Weichphasen aus vorgebildeten aliphatischen, difunktionellen Polyestern mit einem zahlenmittleren Molekulargewicht Mw zwischen 500 g/mol und 3000 g/mol. Eine Kopplung der Hart- und Weichphasen kann zusätzlich durch Reaktivverbinder wie Diisocyanaten erfolgen, die zum Beispiel mit endständigen Alkoholgruppen reagieren.

### TPU-Chemie

Thermoplastische Polyurethane sind hinlänglich bekannt. Die Herstellung erfolgt durch Umsetzung von (a) Isocyanaten mit (b) gegenüber Isocyanaten reaktiven Verbindungen / Polyol mit einem zahlenmittleren Molekulargewicht von 0,5 × 10³g /mol bis 100 × 10³g /mol und gegebenenfalls (c) Kettenverlängerungsmitteln mit einem Molekulargewicht von 0,05 × 10³ g /mol bis 0,499 × 10³g /mol gegebenenfalls in Gegenwart von (d) Katalysatoren und/oder (e) üblichen Hilfsstoffen und/oder Zusatzstoffen.

Die Komponenten (a) Isocyanat, (b) gegenüber Isocyanaten reaktive Verbindungen / Polyol, (c) Kettenverlängerungsmittel werden einzeln oder zusammen auch als Aufbaukomponenten angesprochen. Die Aufbaukomponenten einschließlich des Katalysators und/oder der üblichen Hilfsstoffe und/oder Zusatzstoffe werden auch Einsatzstoffe genannt.

Zur Einstellung von Härte und Schmelzindex der TPU können die eingesetzten Mengen der Aufbaukomponenten (b) und (c) in ihren molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung von weicheren thermoplastischen Polyurethanen, z.B. solchen mit einer Shore A Härte von kleiner als 95, vorzugsweise von 70 bis 95 Shore A, können bevorzugt die im wesentlichen difunktionellen Polyole (b) auch als Polyhydroxylverbindungen (b) bezeichnet und die Kettenverlängerungsmittel (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 Shore D bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen TPU werden die Aufbaukomponenten (a), (b), in einer bevorzugten Ausführungsform auch (c), bevorzugt in Gegenwart eines Katalysators (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden erfindungsgemäß TPU hergestellt, bei denen das TPU ein gewichtsmittleres Molekulargewicht von mindestens 0,1×10⁶ g/mol, bevorzugt von mindestens 0,4 ×10⁶ g/mol und insbesondere größer als 0,6 ×10⁶ g/mol aufweist. Die Obergrenze für das gewichtsmittlere Molekulargewicht der TPU wird in aller Regel durch die Verarbeitbarkeit wie auch das gewünschte Eigenschaftsspektrum bestimmt. Bevorzugt liegt das zahlenmittlere Molekulargewicht der TPU nicht über 0,8 ×10⁶ g/mol. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als organische Isocyanate (a) werden bevorzugt aliphatische, cycloaliphatische, araliphatische und/oder aromatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-lso-cyanato-3,3,5-trimethyl-5-isocyanatomethyl-cyclohexan (Isophoron-diisocyanat, IPDI), 1,4-Bis(isocyanatomethyl)cyclohexan und/oder 1,3-Bis(isocyanatomethyl)cyclohexan (HXDI), 2,4-Paraphenylendiisocynat (PPDI), 2,4-Tetramethylenxylendiisocyant (TMXDI), 4,4'-, 2,4'- und 2,2'-Dicyclohexylmethan-diisocyanat (H12 MDI) 1,6-Hexamethylen-diisocyanat (HDI)1,4-Cyclohexan-diisocyanat, 1-Methyl-2,4- und/oder-2,6-cyclohexan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat.

Bevorzugt werden die Isocyanate 2,2`-, 2,4'- und/oder 4,4'-Diphenylmethandiisocyanat (MDI), 1,6-Hexamethylen-diisocyanat (HDI) und 4,4'-, 2,4'- und 2,2'-Dicyclohexylmethan-diisocyanat (H12 MDI) verwendet, besonders bevorzugt ist 4,4"-Diphenylmethandiisocyanat (4,4'-MDI). Als gegenüber Isocyanaten reaktive Verbindungen (b) sind bevorzugt solche mit einem Molekulargewicht zwischen 500 g/mol und 8 ×10³ g/mol, bevorzugt 0,7 × 10³ g/Mol bis 6,0 × 10³ g/Mol, insbesondere 0,8 × 10³ g/Mol bis 4,0 × 10³ g/Mol.

Die gegenüber Isocyanat reaktive Verbindung (b) hat im statistischen Mittel mindestens 1,8 und höchstens 3,0 zerewitinoffaktiven Wasserstoffatomen, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Die gegenüber Isocyanat reaktive Verbindung ist im Wesentlichen linear und ist eine gegenüber Isocyanat reaktive Substanz oder eine Mischung verschiedener Substanzen, wobei dann die Mischung die genannte Anforderung erfüllt.

Diese langkettigen Verbindungen werden mit einem Stoffmengenanteil von 1 Äquivalent-Mol% bis 80 Äquivalent-Mol%, bezogen auf den Isocyanatgruppengehalt des Polyisocyanats eingesetzt.

Bevorzugt besitzen die gegenüber Isocyanat reaktive Verbindung (b) eine reaktive Gruppe ausgewählt aus der Hydroxylgruppe, der Aminogruppe, der Mercaptogruppe oder der Carbonsäuregruppe. Bevorzugt handelt es sich um die Hydroxylgruppe. Besonders bevorzugt ist die gegenüber Isocyanat reaktive Verbindung (b) ausgewählt aus der Gruppe der Polyesterole, der Polyetherole oder der Polycarbonatdiole, die auch unter dem Begriff "Polyole" zusammengefasst werden.

Weiter bevorzugt sind Polyesterdiole, bevorzugt Polycaprolacton, und/oder Polyetherpolyole, bevorzugt Polyetherdiole, weiter bevorzugt solche auf der Basis von Ethylenoxid, Propylenoxid und/oder Butylenoxid, bevorzugt Polypropylenglykol. Ein besonder bevorzugter Polyether ist Polytetrahydrofuran (PTHF), insbesondere Polyetherole.

Besonders bevorzugt werden als Polyole solche aus der folgenden Gruppe gewählt: Copolyester basierend auf Adipinsäure, Bernsteinsäure, Pentandisäure, Sebazinsäure oder deren Mischungen und Gemischen aus 1,2-Ethandiol und 1,4-Butandiol, Copolyester basierend auf Adipinsäure, Bernsteinsäure, Pentandisäure, Sebazinsäure oder deren Mischungen und Gemischen aus 1,4-Butandiol und 1,6-Hexandiol, Polyester basierend auf Adipinsäure, Bernsteinsäure, Pentandisäure, Sebazinsäure oder deren Mischungen und 3-Methyl-Pentandiol-1.5 und/oder Polytetramethylenglykol (Polytetrahydrofuran, PTHF).

Besonders bevorzugt ist die Verwendung des Copolyesters basierend auf Adipinsäure und Gemischen aus 1,2-Ethandiol und 1,4-Butandiol oder des Copolyesters basierend auf Adipinsäure und 1,4-Butandiol und 1,6-Hexandiol oder des Polyesters basieren auf Adipinsäure und Polytetramethylenglykol (Polytetrahydrofuran PTHF) oder deren Mischung.

Ganz besonders bevorzugt wird als Polyol Polyesters basierend auf Adipinsäure und Polytetramethylenglykol (PTHF) oder deren Mischungen verwendet.

In bevorzugten Ausführungsformen werden Kettenverlängerungsmittel (c) eingesetzt, dies sind bevorzugt aliphatische, araliphatische, aromatische und/oder cycloaliphatische Verbindungen mit einem Molekulargewicht von 0,05 × 10³ g/mol bis 0,499 × 10³ g/mol, bevorzugt mit 2 mit Isocyanat reaktiven Gruppen, die auch als funktionelle Gruppen bezeichnet werden.

Bevorzugt ist der Kettenverlängerer (c) mindestens ein Kettenverlängerer ausgewählt aus der Gruppe bestehend aus 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol. Besonders geeignet sind Kettenverlängerer ausgewählt aus der Gruppe bestehend aus 1,2-Ethylenglycol, 1,3-Propandiol, 1,4-Butandiol und 1,6-Hexandiol.

Ganz besonders bevorzugte Kettenverlängere sind 1,4-Butandiol, 1,6-Hexandiol und Ethandiol. In bevorzugten Ausführungsformen werden mit den Aufbaukomponenten Katalysatoren (d) eingesetzt. Dies sind insbesondere Katalysatoren, die die Reaktion zwischen den NCO-Gruppen der Isocyanate (a) und den Hydroxylgruppen der gegenüber Isocyanaten reaktiven Verbindung (b) und, sofern eingesetzt, dem Kettenverlängerungsmittel (c) beschleunigen. Bevorzugte Katalysatoren sind tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan. In einer anderen bevorzugten Ausführungsform sind die Katalysatoren organische Metallverbindungen wie Titansäureester, Eisenverbindungen, bevorzugt Eisen-(III)- acetylacetonat, Zinnverbindungen, bevorzugt solche von Carbonsäuren, besonders bevorzugt Zinndiacetat, Zinndioctoat, Zinndilaurat oder die Zinndialkylsalze, weiter bevorzugt Dibutylzinndiacetat, Dibutylzinndilaurat, oder Wismutsalze von Carbonsäuren, bevorzugt Wismutdecanoat.

Besonderes bevorzugte Katalysatoren sind Zinndioctoat, Wismutdecanoat. Titansäureester Der Katalysator (d) wird bevorzugt in Mengen von 0,0001 bis 0,1 Gew.-Teilen pro 100 Gew.-Teile der mit Isocyanaten reaktiven Verbindung (b) eingesetzt.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher.

### Treibmittel

Erfindungsgemäß wird das Elastomer mit einem bei 23 °C festem Treibmittel vermischt. Dabei liegt das Elastomer als Pulver vor.

Das feste Treibmittel liegt ebenfalls in Form eines Pulvers vor, bevorzugt mit einer durchschnittlichen Partikelgröße von 1 µm bis 300 µm, vorzugsweise von 5 µm bis 100 µm und insbesondere von 10 µm bis 80 µm eingesetzt. Über die Partikelgröße kann die Zersetzungstemperatur und -geschwindigkeit beeinflußt werden. Je kleiner die Partikelgröße, um so größer ist die Zersetzungsgeschwindigkeit. Gleichzeitig, kann über die Art, Menge und die Größe des Pulvers die Form des Schaums beeinflusst werden.

Als feste Treibmittel finden zweckmäßigerweise chemische Verbindungen Verwendung, die sich, innerhalb eines bestimmten, nicht zu großen Temperaturintervalls zersetzen und eine hohe Gasausbeute aufweisen. Hierbei muss die Zersetzungstemperatur der Verarbeitungstemperatur und der thermischen Beanspruchbarkeit des zu verschäumenden thermoplastischen Elastomers, bevorzugt des thermoplastischen Polyurethans (TPU) angepasst werden. Die jeweiligen Bedingungen können experimentell leicht ermittelt werden. Die Zersetzung des Treibmittels darf nicht zu spontan erfolgen, um einen Wärmestau und damit verbundene Verbrennung des TPU zu vermeiden.

Das feste Treibmittel soll sich vorzugsweise homogen mit dem TPU vermischen lassen und soll Zersetzungsprodukte ergeben, die gesundheitlich unbedenklich sind, die die Thermostabilitat und mechanischen Eigenschaften der zellhaltigen PU-Formkorper möglichst nicht negativ beeinflussen, die nicht ausblühen und keine Verfärbungen hervorrufen.

Bevorzugte feste Treibmittel, die diese Anforderungen zumindest teilweise oder im Wesentlichen vollständig erfüllen, sind Azoverbindungen, Hydrazine, Semicarbazide, Triazole, N-Nitroso-Verbindungen, Carbonate, Hydrogencarbonate, Hydrogensulfate, Ammoniumverbindungen

Bevorzugte Azoverbindungen sind ausgewählt aus der Gruppe Azoisobuttersaurenitril, Azodicarbonamid und Bariumazodicarboxylat.

Bevorzugte Hydrazine sind Diphenylsulfon-3,3'-disulfohydrazid, 4,4' -Oxybis-(benzolsulfohydrazid), Trihydrazinotriazin oder Arylbis(sulfohydrazid).

Bevorzugte Semicarbazide sind p-Toluylensulfonylsemicarbazid oder 4,4'-Oxybis-(ben- 15 zolsulfonyl-semicarbazid).

Ein bevorzugtes Triazole ist 5-Morpholyl-1,2,3,4-thiatriazol.

Bevorzugte N-Nitroso-Verbindungen sind N,N'-Dinitrosopentamethylentetramin oder N,NDimethyl-N,N'-dinitrosoterephthalamid.

Von den genannten Verbindungen sind besonders die aus der Gruppe der Azoverbindungen und der Gruppe der Hydrazine bevorzugt, weiter bevorzugt sind Azoisobuttersäurenitril, Diphenylsulfon-3,3'-disulfohydrazid und/oder 4,4' -Oxybis(benzolsulfohydrazid) und insbesondere Azodicarbonamid.

Die festen Treibmittel können als Einzelverbindungen oder als Mischungen eingesetzt werden.

### Schaumstabilisatoren

Zur Stabilisierung der aufgeschäumten Elastomere werden Schaumstabilisatoren eingesetzt. Als Schaumstabilisatoren werden Stoffe bezeichnet, welche die Ausbildung einer regelmäßigen Zellstruktur bei der Schaumbildung fördern. Bevorzugte Schaumstabilisatoren sind aus der folgenden Gruppe ausgewählt: Siliconhaltige Schaumstabilisatoren, wie Siloxan-Oxalkylen-Mischpolymerisate und andere Organopolysiloxane, Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertes Bisphenol A, Polyvinylalkohol, Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A.

In bevorzugten Ausführungsformen wird ein Schaumstabilisator eingesetzt, in anderen bevorzugten Ausführungsformen wird eine Mischungen aus zwei oder mehreren dieser Schaumstabilisatoren eingesetzt.

Schaumstabilisatoren werden bevorzugt in einer Menge von 0,1 Gew.-% bis 4 Gew.-%, besonders bevorzugt 0,3 Gew.-% bis 2 Gew.-%, bezogen auf das Gesamtgewicht der Aufbaukomponenten verwendet.

### Stabilisatoren

Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, sterisch gehinderte Phenole, Hindered Amine Light Stabilizer, UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S136.

In einer bevorzugten Ausführungsform weisen die UV-Absorber ein zahlenmittleres Molekulargewicht von größer als 0,3 × 10³ g/mol, insbesondere größer als 0,39 × 10³ g/mol, auf. Ferner sollten die bevorzugt verwendeten UV-Absorber ein Molekulargewicht von nicht größer als 5 × 10³ g/mol, besonders bevorzugt von nicht größer als 2 × 10³ g/mol aufweisen.

Besonders geeignet als UV-Absorber ist die Gruppe der Benzotriazole. Beispiele für besonders geeignete Benzotriazole sind Tinuvin^{®} 213, Tinuvin^{®} 234, Tinuvin^{®} 571, sowie Tinuvin^{®} 384 und das Eversorb^{®}82 . Üblicherweise werden die UV-Absorber in Mengen von 0.01 Gew.-%, bis 5 Gew.-% bezogen auf die Gesamtmasse TPU zudosiert, bevorzugt 0,1 Gew.-%, bis 2,0 Gew. %, insbesondere 0,2 Gew.-% bis 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additives Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10 × 10³g/mol, besonders bevorzugt nicht größer als 5 × 10³ g/mol sein.

Besonders bevorzugte Hindered Amine Light Stabilizer sind bis-(1,2,2,6,6-pentamethylpiperidyl) sebacat (Tinuvin^{®} 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin^{®} 622). Insbesondere bevorzugt ist das Kondensationsprodukt aus 1-Hydroxyethyl-2,2,6,6-tetramethyl-4-hydroxypiperidin und Bernsteinsäure (Tinuvin^{®} 622), wenn der Titangehalt des fertigen Produktes kleiner als 150 ppm, bevorzugt kleiner als 50 ppm, insbesondere kleiner als 10 ppm bezogen auf die eingesetzten Aufbaukomponenten ist.

HALS Verbindungen werden bevorzugt in einer Konzentration von 0,01 Gew.-% bis 5 Gew.-% eingesetzt, besonders bevorzugt von 0,1 Gew.-% bis 1 Gew.-%, insbesondere von 0,15 Gew.-% bis 0,3 Gew.-% bezogen auf das Gesamtgewicht des thermoplastischen Polyurethanes bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z.B. aus Plastics Additives Handbook, 5th Edition, H. Zweifel, ed., Hanser Publishers, München, 2001.

### Herstellung

Die Herstellung der TPU kann nach den bekannten Verfahren diskontinuierlich oder kontinuierlich, beispielsweise mit Reaktionsextrudern oder dem Bandverfahren nach dem "one-shot-" oder dem Prepolymer-Verfahren, bevorzugt nach dem "one-shot"-Verfahren erfolgen. Bei dem "one-shot-"Verfahren werden die zur Reaktion kommenden Komponenten (a), (b), in bevorzugten Ausführungsformen auch die Komponenten (c), (d) und/oder (e) nacheinander oder gleichzeitig miteinander vermischt, wobei die Polymerisationsreaktion unmittelbar einsetzt. Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 100°C bis 280°C, vorzugsweise 140°C bis 250°C, zur Reaktion gebracht. Das erhaltene Polyurethan wird extrudiert, abgekühlt und granuliert.

Bevorzugt wird für die Herstellung des thermoplastischen Polyurethans ein Zweiwellenextruder verwendet, da der Zweiwellenextruder zwangsfördernd arbeitet und so eine präzisere Einstellung der Temperatur und Ausstoßmenge auf dem Extruder möglich ist.

Die verwendeten Elastomere werden vorzugsweise als Granulat hergestellt mit einer maximalen Ausdehnung von 5 cm, bevorzugt nicht größer als 3 cm, weiter bevorzugt nicht größer als 1 cm und besonders bevorzugt nicht größer als 0,6 cm und gleichzeig nicht kleiner als 1mm.

Erfindungsgemäß wird das Elastomer, bevorzugt das thermoplastische Polyurethan als Pulver eingesetzt. Bevorzugt hat das Pulver eine maximale Ausdehnung von 2mm bevorzugt 1mm, besonders 50µm bis 500µm.

### Elektromagnetische Strahlung absorbierendes Additiv

In einer weiteren bevorzugten Ausführungsform enthält das thermoplastische Elastomer mindestens ein Additiv, das die elektromagnetische Strahlung absorbiert. Durch die Absorption der elektromagnetischen Strahlung werden primär die Additive, dadurch aber auch das thermoplastische Elastomer bis zur Schmelze erhitzt. Das hat den Vorteil, dass durch geeignete Wahl dieses Additivs einerseits elektromagnetische Elastomere, die selbst die elektromagnetische Strahlung absorbieren schneller erhitzt werden können, aber auch Elastomere, die selbst nur unzureichend oder keine elektromagnetische Strahlung absorbieren, werden auf diese Weise dem Mikrowellenaufschäumen zugänglich.

Das Additiv wird so ausgewählt, dass es sich aufgrund seiner Löslichkeit nach kurzer Zeit gleichmäßig im Polymer verteilt und in diesem stabil gehalten wird.

Bevorzugt wird das die elektromagnetische Strahlung absorbierenden Additiv ausgewählt aus der Gruppe der Phthalate, Alkylsulfonsäureester, Zitronensäureester, Adipinsäureester, Cyclohexandicabonsäureester, insbesondere 1,2-Cyclohexandicarbonsäurediisononylester, und Glycerinester, Glykole, und Wasser.

Besonders bevorzugte Additive sind Glycerintriacetat, Triethylen- oder Tripropylenglykol oder Zitronensäureester. Ganz besonders bevorzugt werden die thermoplastischen Pulver mit einem 1,2,3-Propantrioltriacetat (Triacetin) angereichert.

In einer weiteren bevorzugten Ausführungsform ist der Anteil des mikrowellenabsorbierenden Additivs 0,01 Gew.-% bis 30 Gew.-%, bevorzugt 0,01 Gew.-% bis 10 Gew.-%, besonders bevorzugt 0,01 Gew.-% bis 5 Gew.-% bezogen auf das gesamte Elastomer.

In einer Ausführungsform liegt nur ein Additiv, das elektromagnetische Strahlung absorbiert vor, in einer anderen Ausführungsform sind mindestens zwei derartige Additive in dem Elastomer enthalten.

In einer anderen bevorzugten Ausführungsform wird das Elastomer vor der Bestrahlung mit einem farbigen Pigment, das üblicherweise eine maximale Korngröße von 1 µm bis 10 µm besitz oder einem flüssigen Farbstoff vermischt.

In einem weiteren bevorzugten Verfahren wird das farbige Pigment nicht homogen mit dem Elastomerpulver vermischt. Dadurch entstehen Schichten mit unterschiedlichen mechanischen Eigenschaften. Zusätzlich kann es zu unterschiedlicher Färbung kommen. Ein weiterer Vorteil des Verfahrens ist, dass unterschiedlich gefärbte Pulverbestandteile gezielt nebeneinander positioniert werden können und auf diese Weise auch eine gezielte farbige Gestaltung des aufgeschäumten Materials möglich wird.

In einer anderen bevorzugten Ausführungsform wird Pulver regional unterschiedlich stark mit elektromagnetischen Strahlen bestrahlt, so dass sich in dem entstehenden Schaum gezielt unterschiedliche Bereich mit unterschiedlichen Dichten ausbilden. Dies hat den weiteren Vorteil, dass auch die Mechanik beeinflusst werden kann, was für viele der weiter unten aufgeführten Verwendungen eine große Bedeutung hat.

Bevorzugt werden die Elastomere zur Herstellung von Formteilen verwendet, die ausgewählt sind aus der Gruppe der Beschichtung, Dämpfungselement, Faltenbalg, Folie, Faser, Formkörper, Fußboden für Gebäude oder Transport, Non-woven, Dichtung, Rolle, Schuhsohle, Schlauch, Kabel, Kabelstecker, Kabelummantelung, Kissen, Laminat, Profil, Riemen, Sattel, Schaum, durch zusätzliches Schäumen der Zubereitung, Steckverbindung, Schleppkabel, Solarmodul, Verkleidung in Automobilen, Wischerblatt.

Besonders bevorzugt sind die Verwendung der erfindungsgemäß hergestellten Formteile für Sichtteile in Automobilen, Kunstleder, Taschen, Verpackungen, Stiefel, Schuhe, Sohlen, Einlagen, Einrichtungsgegenständen, Möbeln. Bevorzugte Sichtteile in Automobilen sind Lenkräder, Schaltknüppel, Griffe, Bekleidung, Protektoren und Sitze.

Jede dieser Verwendungen für sich genommen ist eine bevorzugte Ausführungsform, die auch als Anwendung bezeichnet wird.

In einer anderen bevorzugten Ausführungsform werden Fasern, bevorzugt solche aus Kunststoff, Glas und/oder Metall in das Elastomer eingelegt, die nach der Verarbeitung ein eigenes Netzwerk innerhalb der Bauteile ausbilden. Hierdurch können sich verbesserte mechanische Eigenschaften des Formteils ergeben.

Ein weiterer Gegenstand der Erfindung ist ein Verfahren zur Herstellung von zumindest teilweise geschäumten Formteilen durch Verbinden des thermoplastischen Elastomerpulvers mittels elektromagnetischer Strahlung in einem Frequenzbereich zwischen 0,01 GHz und 300 GHz, bevorzugt im Frequenzbereich zwischen 0,01 GHz und 100 GHz, weiter bevorzugt zwischen 0,1 GHz und 50 GHz. Weiter bevorzugt wird die elektromagnetische Strahlung zwischen 0,1 und 15 Minuten auf das Granulat oder Pulver einwirken gelassen.

In einer bevorzugten Ausführungsform dieses Verfahrens werden die erfindungsgemäßen thermoplastischen Elastomere in eine nicht die verwendete elektromagnetische Strahlung absorbierende Form gegeben und darin mittels Mikrowelle aufgebläht und zu dem Formkörper verschweißt.

### Beispiele

Verwendete Geräte:
   Labormikrowellensystem des Typs MLS-Ethos plus mit einer Höchstleistung von 2,5 kW.
Messmethoden:
   Schüttdichte
   Zur Bestimmung der Schüttdichte wurde ein 700 ml Gefäß mit dem Pulver gefüllt und das Gewicht mittels einer Präzisionswaage bestimmt. Bei der so aus Masse und Volumen berechneten Dichte kann von einer Messgenauigkeit von ± 10 g/l ausgegangen werden.
Dichte
   Zur Bestimmung der Schaumkörperdichte wurde die Probe zurecht geschnitten, vermessen und das Gewicht mittels einer Präzisionswaage bestimmt. Bei der so aus Masse und Volumen berechneten Dichte kann von einer Messgenauigkeit von ± 20 g/l ausgegangen werden.
Asker C Härte
   Die Asker C Härte wurde mit einer Stativmessuhr bestimmt nach der zum Zeitpunkt der Anmeldung gültigen DIN ISO 7619. Die Messungen erfolgten an der Probenoberseite und-unterseite.
Einsatzstoffe

| | |
|---|---|
| TPU-Pulver: | thermoplastisches Polyurethan Elastollan^{®}, erhalten aus granuliertem thermoplastischen Polyurethan der BASF Polyurethanes GmbH, Lemförde, Deutschland |
| Mikrowellenabsorber: | Triacetin (1 ,2,3-Propantrioltriacetat) |
| Treibmittel: | Azodicarboxamid, bekanntes chemische Treibmittel für Thermoplaste und Epoxidharzen |

### Rezepturen der thermoplastischen Polyurethane (TPU)

**Tabelle 1 - Ausgangssubstanzen zur Herstellung der thermoplastischen Polyurethane**

| Bezeichnung | Chemische Zusammensetzung | Quelle |
|---|---|---|
| Iso1 | 1,6 Hexandiisocyanat | BASF |
| Iso2 | 4,4'-Methylendiphenylendiisocyanat | BASF |
| Polyol1 | Polytetrahydrofuran, Mn: 1000, OH-Zahl : 111,1 | BASF |
| Polyol2 | Polyesterdiol, Mn: 2200, OH-Zahl : 51 | BASF |
| KV1 | 1 ,4-Butandiol, Kettenverlängerer | BASF |
| KV2 | 1 ,6-Hexandiol, Kettenverlängerer | BASF |
| AO1 | Antioxidans | BASF |
| AO2 | Antioxidans | BASF |
| LS1 | Lichtschutzmittel | BASF |
| HS1 | Hydrolysestabilisator Carbodiimid | BASF |
| FL1 | Talkum Füllstoff | |
| GL1 | Wachs Verarbeitungshilfsmittel | |

### TPU 1 Rezeptur

| Name | Menge | Einheit |
|---|---|---|
| Polyol1 | 6920 | KG |
| Iso1 | 1861 | KG |
| KV2 | 920 | KG |
| AO1 | 45 | KG |
| HS1 | 69 | KG |
| AO2 | 50 | KG |
| GL1 | 20 | KG |
| LS1 | 100 | KG |
| FL1 | 15 | KG |

### TPU 2-Rezeptur

| Name | Menge | Einheit |
|---|---|---|
| Polyol2 | 5601 | KG |
| Iso2 | 3528 | KG |
| KV1 | 766 | KG |
| AO2 | 100 | KG |
| GL1 | 5 | KG |

### Herstellung der Polymere im Handgussverfahren

Die Polyole wurden bei 80 °C in einem Behälter vorgelegt und mit den Komponenten gemäß der oben genannten Rezepturen bei einer Ansatzgröße von 2 kg unter starkem Rühren vermischt. Die Reaktionsmischung erhitzte sich auf über 110 °C und wurde dann auf einen auf ca. 110 °C aufgeheizten, teflonbeschichteten Tisch ausgegossen. Die erhaltene Gießschwarte wurde 15 Stunden bei 80 °C getempert, anschließend groß zerkleinert und zu Granulat extrudiert.

Die Extrusion erfolgte auf einem Doppelschneckenextruder der einen Strangdurchmesser von ca. 2 mm lieferte.

| | |
|---|---|
| Extruder: | gleichläufiger Doppelschneckenextruder, APV MP19 |
| Temperaturprofil: | HZ1 (Einzug) 175 °C bis 185 °C |
| | HZ2 180 °C bis 190 °C |
| | HZ3 185 °C bis 195 °C |
| | HZ4 185 °C bis 195 °C |
| | HZ5 (Düse) 180 °C bis 190 °C |
| Schneckendrehzahl: | 100 U/min |
| Druck: | ca. 10 bis 30 bar |
| Strangkühlung: | Wasserbad (10 °C) |

Mikrogranulate wurden auf einem Berstorff Zweischneckenextruder ZE 40, der mit einer Mikrolochplatte und einer Mikrounterwassergranulierung der Firma Gala ausgestattet war, hergestellt.

Die Pulvermahlung erfolgte auf einer Retsch Mühle ZM200, mit verschiedenen Siebeinsätzen von 0,35mm, 1mm und 2mm, unter Trockeneis oder N2 Kühlung, sowie Aussiebung der in den Beispielen beschriebenen Fraktionen.

### Beispiel 1 - erfindungsgemäßes Elastomer

Das TPU1 wurde durch kryogene Vermahlung auf eine Partikelgröße von 125 µm zerkleinert. Die Schüttdichte dieses Pulvers beträgt 400 g/L. 49 g des Pulvers wurden zusammen mit 1 g Azodicarboxamid in einem Mörser zerkleinert und homogenisiert. Jeweils 7 g des Pulvers wurden gleichmäßig in Teflonformen der Größe 100 mm × 70 mm verteilt und in der Mikrowelle für 2 Minuten mit einer Leistung von 600 W bestrahlt. Um eine homogene Mikrowellenbestrahlung zu erzielen, wurden die Formen während der Bestrahlung auf einem Drehteller rotiert und zusätzlich wurden die einzelnen Formen nach 1 min per Hand um 180° auf der horizontalen Achse gedreht. Nach 2 Minuten ist das Pulver nahezu vollständig zusammengesintert und aufgeschäumt. Nach einer kurzen Abkühlphase von 3 Minuten bei Raumtemperatur von 23°C konnten die aufgeschäumten Platten aus den Formen entnommen werden. Die Schaumkörperdichte beträgt 230 g/l. Die Asker C Härte beträgt 27 an der Probenunterseite und 35 an der Oberseite.

### Beispiel 2 - erfindungsgemäßes Elastomer

Das TPU1 wurde durch kryogene Vermahlung auf eine Partikelgröße von 125 µm zerkleinert. Die Schüttdichte dieses Pulvers beträgt 400 g/L. 45 g des Pulvers wurden zusammen mit 4 g Triacetin und 1 g Azodicarboxamid in einem Mörser zerkleinert und homogenisiert. Jeweils 8 g des Pulvers wurden gleichmäßig in Teflonformen der Größe 100 mm × 70 mm verteilt und in der Mikrowelle für 1,5 Minuten mit einer Leistung von 600 W bestrahlt. Um einen homogene Mikrowellenbestrahlung zu erzielen, wurden die Formen während der Bestrahlung auf einem Drehteller rotiert und zusätzlich wurden die einzelnen Formen nach 1 min per Hand um 180° auf der horizontalen Achse gedreht. Nach 1,5 Minuten ist das Pulver nahezu vollständig zusammengesintert und aufgeschäumt. Nach einer kurzen Abkühlphase von 3 Minuten bei Raumtemperatur von 22°C konnten die aufgeschäumten Platten aus den Formen entnommen werden. Die Schaumkörperdichte beträgt 200 g/L. Die Asker C Härte beträgt 34 an der Probenunterseite und 40 an der Oberseite.

### Beispiel 3 - erfindungsgemäßes Elastomer

Das TPU2 wurde durch Unterwassergranulierung in einer Partikelgröße von weniger als 500 µm gefertigt. Die Schüttdichte dieses Mikrogranulatpulvers beträgt 700 g/L. 49 g des Pulvers wurden zusammen mit 1 g Azodicarboxamid in einem Mörser zerkleinert und homogenisiert. Jeweils 12 g des Pulvers wurden gleichmäßig in Teflonformen der Größe 100 mm × 70 mm verteilt und in der Mikrowelle für 1,75 Minuten mit einer Leistung von 600 W bestrahlt. Um einen homogene Mikrowellenbestrahlung zu erzielen, wurden die Formen während der Bestrahlung auf einem Drehteller rotiert und zusätzlich wurden die einzelnen Formen nach 1 min per Hand um 180° auf der horizontalen Achse gedreht. Nach 1,75 Minuten ist das Pulver nahezu vollständig zusammengesintert und aufgeschäumt. Nach einer kurzen Abkühlphase von 3 Minuten bei Raumtemperatur von 22°C konnten die aufgeschäumten Platten aus den Formen entnommen werden. Die Schaumkörperdichte beträgt 550 g/L. Die Asker C Härte beträgt 67 an der Probenunterseite und -oberseite.

### Beispiel 4 - erfindungsgemäßes Elastomer, nicht erfindungsgemäßes Treibmittel

Das TPU2 wurde durch Unterwassergranulierung in einer Partikelgröße von weniger als 500 µm gefertigt. Die Schüttdichte dieses Mikrogranulatpulvers beträgt 700 g/L. 50 g des Mikrogranulates wurden zusammen mit 4 g Cyclohexan in einem Autoklav bei 100°C 60 Minuten imprägniert und anschließend auf 23°C abgekühlt. Nach Öffnen des Autoklav wurden jeweils 12 g des Pulvers gleichmäßig in Teflonformen der Größe 100 mm × 70 mm verteilt und in der Mikrowelle für 1,5 Minuten mit eine Leistung von 600 W bestrahlt. Um eine homogene Mikrowellenbestrahlung zu erzielen, wurden die Formen während der Bestrahlung auf einem Drehteller rotiert und zusätzlich wurden die einzelnen Formen nach 1 min per Hand um 180° auf der horizontalen Achse gedreht. Nach 1,5 Minuten ist das Pulver nahezu vollständig zusammengesintert und aufgeschäumt. Nach einer kurzen Abkühlphase von 3 Minuten bei Raumtemperatur von 22°C konnten die aufgeschäumten Platten aus den Formen entnommen werden. Die Schaumkörperdichte beträgt 600 g/L. Die Asker C Härte beträgt 69 an der Probenunterseite und 67 an der Probenoberseite.

## Patentansprüche

1. Verfahren zum Aufschäumen von thermoplastischem Elastomer enthaltend ein bei 23 °C festes Treibmittel, wobei das Elastomer und das Treibmittel als Pulver vorliegen und das Elastomer mit dem Treibmittel vermischt und mit elektromagnetischer Strahlung so erhitzt wird, dass das Elastomer zumindest teilweise schmilzt und so zu einem Schaum aufschäumt, wobei die Frequenz der elektromagnetischen Strahlung zwischen 0,01 GHz und 300 GHz liegt, bevorzugt zwischen 0,01 GHz und 100 GHz, besonders bevorzugt zwischen 0,1 GHz und 50 GHz, und das Elastomer ausgewählt ist aus der Gruppe, thermoplastisches Polyurethan (TPU), thermoplastisches Polyesterelastomer, und thermoplastisches Copolyamid.

2. Verfahren nach Anspruch 1,
**dadurch gekennzeichnet, dass** das Elastomer mindestens ein Additiv enthält, das die elektromagnetische Strahlung absorbiert, wobei die Absorption so stark ist, dass sie merklich zur Erhitzung des Elastomers beiträgt.

3. Verfahren nach einem der vorherigen Ansprüche, **dadurch gekennzeichnet, dass** das thermoplastisches Polyesterelastomer, ausgewählt ist aus der Gruppe Polyetherester und Polyesterester, und/oder das thermoplastische Copolyamid ausgewählt ist aus der Gruppe Poyetheramid und Polyesteramid.

4. Verfahren gemäß einem der vorgehenden Ansprüche, **dadurch gekennzeichnet, dass** ein Bereich des Elastomers mit einem Maser oder einem gerichteten elektromagnetischen Strahl einer Frequenz zwischen 0,01 GHz und 300 GHz erwärmt wird.

5. Verfahren nach einem der vorhergehenden Ansprüche, **dadurch gekennzeichnet, dass** das Elastomer in eine Form gegeben wird und in der Form durch Einwirkung der elektromagnetischen Strahlung zu einem Formkörper expandiert wird.

6. Verwendung der Verfahren gemäß einem der Ansprüche 1 bis 5 für die Herstellung von Formteilen.

## Claims

1. A process for foaming thermoplastic elastomer comprising a blowing agent which is solid at 23°C, where the elastomer and the blowing agent are present as powder and the elastomer is mixed with the blowing agent and heated by electromagnetic radiation such that the elastomer at least partly melts and thus foams to give a foam, where the frequency of the electromagnetic radiation is in the range from 0.01 GHz to 300 GHz, preferably from 0.01 GHz to 100 GHz, particularly preferably from 0.1 GHz to 50 GHz, and the elastomer is selected from the group consisting of thermoplastic polyurethane (TPU), thermoplastic polyester elastomer and thermoplastic copolyamide.

2. The process according to claim 1,
wherein the elastomer comprises at least one additive which absorbs the electromagnetic radiation, with the absorption being so strong that it contributes notably to heating of the elastomer.

3. The process according to either of the preceding claims, wherein the thermoplastic polyester elastomer is selected from the group consisting of polyether ester and polyester ester, and/or the thermoplastic copolyamide is selected from the group consisting of polyetheramide and polyesteramide.

4. The process according to any of the preceding claims, wherein a region of the elastomer is heated by means of a maser or a directed electromagnetic beam having a frequency in the range from 0.01 GHz to 300 GHz.

5. The process according to any of the preceding claims, wherein the elastomer is placed in a mold and is expanded in the mold by action of the electromagnetic radiation to give a shaped body.

6. The use of the process according to any of claims 1 to 5 for the production of moldings.

## Revendications

1. Procédé d'expansion d'un élastomère thermoplastique contenant un agent porogène solide à 23 °C, l'élastomère et l'agent porogène se présentant sous forme d'une poudre et l'élastomère étant mélangé à l'agent porogène et étant chauffé à l'aide d'un rayonnement électromagnétique de telle sorte que l'élastomère subisse au moins partiellement une fusion, pour ainsi s'expanser pour former une mousse, la fréquence du rayonnement électromagnétique étant comprise entre 0,01 GHz et 300 GHz, de préférence entre 0,01 GHz et 100 GHz, d'une manière particulièrement préférée entre 0,1 GHz et 50 GHz, et l'élastomère étant choisi dans le groupe consistant en un polyuréthane thermoplastique (TPU), un élastomère de polyester thermoplastique et un copolyamide thermoplastique.

2. Procédé selon la revendication 1, **caractérisé en ce que** l'élastomère contient au moins un additif, qui absorbe le rayonnement électromagnétique, l'absorption étant forte au point de contribuer d'une manière marquée au chauffage de l'élastomère.

3. Procédé selon l'une des revendications précédentes, **caractérisé en ce que** l'élastomère de polyester thermoplastique est choisi dans le groupe des polyétheresters et des polyesteresters, et/ou le copolymère thermoplastique est choisi dans le groupe polyétheramide et polyesteramide.

4. Procédé selon l'une des revendications précédentes, **caractérisé en ce qu'**une zone de l'élastomère est chauffée à l'aide d'un maser ou d'un rayonnement électromagnétique orienté ayant une fréquence entre 0,01 GHz et 300 GHz.

5. Procédé selon l'une des revendications précédentes, **caractérisé en ce que** l'élastomère est placé dans un moule et subit dans le moule une expansion sous l'action du rayonnement électromagnétique pour former un objet moulé.

6. Utilisation du procédé selon l'une des revendications 1 à 5 pour la fabrication de pièces moulées.
